# EUROPEAN PATENT SPECIFICATION

(11) **EP 2 662 250 B1**
(45) Date of publication and mention of the grant of the patent: **12.08.2015**
(21) Application number: 13166165.4
(22) Date of filing: 02.05.2013
(51) Int. Cl.: B60R 22/00, B60R 22/48, B60R 21/015

(54) **Seat belt reminder system**
Sicherheitsgurterinnerungssystem
Système de rappel de ceinture de sécurité

(30) Priority: 09.05.2012 US 201213467341
(43) Date of publication of application: 13.11.2013
(73) Proprietor: Delphi Technologies, Inc., Troy, MI 48007 (US)
(72) Inventor: Sickon, Richard P., Rochester Hills, MI Michigan 48309 (US); Constable, Robert K., Kokomo, IN Indiana 46902 (US)
(74) Representative: Delphi France SAS

(56) References cited:
- EP-A1- 1 588 908
- EP-A1- 1 775 174
- EP-A2- 1 961 625

## Description

### TECHNICAL FIELD OF INVENTION

The invention generally relates to seat belt system for a vehicle, and more particularly relates to a system determining whether an occupant of a vehicle seat has properly latched a seat belt.

### BACKGROUND OF INVENTION

A seat belt reminder system is configured to detect whether the occupant of a seat in a vehicle has properly latched a tongue of a seat belt into a seat belt buckle. If the occupant has not properly latched the seat belt into the seat belt buckle, the occupant may be alerted to check and properly latch tongue of the seat belt into the seat belt buckle. As used herein, a tongue refers to any feature for latching a seat belt to a seat belt buckle.

The current state of the art for seat belt reminder systems is to use an occupant sensor to monitor if an occupant is sitting in a seat in conjunction with a buckle sensor to monitor if the occupant's seat belt is properly buckled. The occupant sensor and the buckle sensor are typically connected to the vehicle electrical system by a wiring harness to provide electrical power to the occupant sensor and buckle sensor and to provide connectivity to communicate with a vehicle controller, such as an airbag controller. Front seats of the vehicle are usually adjustable for fore/aft positioning. The wiring harness should be designed and manufactured to accommodate bending and flexing caused by the seat travel during adjustment, which may undesirably increase the cost of the wiring harness.

Motor vehicle manufacturers in pursuit of better government crash protection ratings (e.g. National Highway Traffic Safety Administration Five Star or European New Car Assessment Programme ratings) have recently included the seat belt reminder system in the rear seats of the vehicle. The rear seats of many newer vehicle designs also moveable to provide sliding adjustment fore and aft and storage positions such as flip and fold, thereby presenting the same wiring harness design and manufacturing issues as front seats. Also, rear seats in minivan, sport utility, and crossover vehicles may be removable, creating additional challenges for easily disconnecting and reliably reconnecting the wiring harness when the seat is removed and reinstalled from the vehicle. EP1588908A1 disclose a seat belt warning system according the preamble of claim 1 of the present invention. EP1961625A2 discloses a switch-based seat sensor for occupant presence detection.

### SUMMARY OF THE INVENTION

In accordance with one embodiment of this invention, an occupant sensor assembly configured to detect an occupant on a seating surface of a seat in a vehicle is provided. The occupant sensor assembly includes a switch mechanism having a first state that corresponds to an absence of the occupant on the seating surface and a second state that corresponds to a presence of the occupant on the seating surface. The occupant sensor assembly also includes a controller that is electrically coupled to the switch mechanism. The controller is configured to be electrically coupled to a buckle sensor. The buckle sensor is configured to detect whether a tongue of a seat belt is latched to a seat belt buckle. The occupant sensor assembly further includes a transmitter that is electrically coupled to the controller and is configured for wireless communication with a receiver that is located remote from the occupant sensor assembly. The occupant sensor assembly additionally includes a battery that is configured to selectively supply electrical power to the controller and the transmitter. The battery is electrically isolated from an electrical system of the vehicle. The battery is not electrically coupled to the transmitter or the controller when the switch mechanism is in the first state. The battery is electrically coupled to the transmitter and the controller when the switch mechanism is in the second state.

In accordance with another embodiment of this invention, the occupant sensor assembly may further include a first plate, a second plate, and a spring disposed between the first plate and the second plate, wherein the spring collapses when the occupant sits on the seating surface. The switch mechanism may be affixed to at least one of the first plate and the second plate. The switch mechanism has the first state corresponding to the absence of the occupant whereby the spring is not collapsed. The switch mechanism has the second state corresponding to the presence of the occupant whereby the spring is collapsed.

In accordance with another embodiment of this invention, the controller may be configured to transmit a signal to the receiver via the transmitter only when the occupant sensor assembly detects the occupant on the seating surface and the buckle sensor detects that the tongue is not latched to the seat belt buckle.

In yet another embodiment of the present invention, a seat assembly configured for a vehicle is provided. The seat assembly includes a seat belt buckle that further includes a buckle sensor. The buckle sensor is configured to detect whether a tongue of a seat belt is latched or unlatched to the seat belt buckle. The seat assembly also includes an occupant sensor assembly that is disposed within a seat cushion of the seat assembly and is configured to detect an occupant on a seating surface of the seat cushion. The seat assembly additionally includes a battery. The battery is isolated from an electrical system of the vehicle. The seat assembly further includes a controller electrically coupled to the occupant sensor assembly, the buckle sensor, and a transmitter. The transmitter is configured for wireless communication with a receiver located remote from the controller. The controller and the transmitter may be electrically coupled to the battery only when the occupant sensor assembly detects the occupant on the seating surface of the seat cushion. The controller, the transmitter, and the battery may be disposed within the occupant sensor assembly.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a cut away view of a vehicle including a seat belt reminder system, illustrated in operational relationship with a seat belt system in accordance with one embodiment;
Fig. 2 is an exploded perspective view of an occupant sensor assembly in accordance with one embodiment;
Fig. 3 is a flowchart of the operation of the seat belt reminder system in accordance with one embodiment; and
Fig. 4 is a flowchart of the operation of the seat belt reminder system in accordance with another embodiment.

### DETAILED DESCRIPTION OF INVENTION

A seat belt reminder system may include an electrical power source, such as a battery that is separate from the electrical system of a vehicle. The seat belt reminder system may also be configured to provide wireless communication between an occupant sensor assembly and a buckle sensor, both located within a seat assembly, and a vehicle controller, such as an airbag system located within a vehicle. Thus, it is unnecessary to provide a wiring harness for transmitting signals between the occupant sensor assembly and the buckle sensor in the seat assembly and vehicle controller or provide power to the occupant sensor assembly and the buckle sensor.

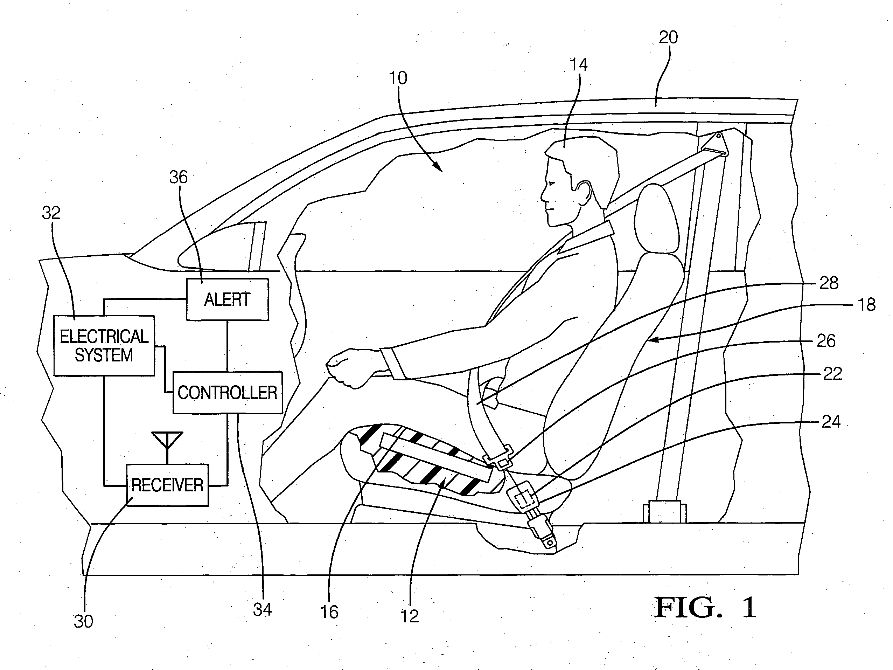

Fig. 1 illustrates a non-limiting example of a seat belt reminder system 10 that includes an occupant sensor assembly 12 configured to detect an occupant 14 on a seating surface 16 of a seat assembly 18 in a vehicle 20. The seat belt reminder system 10 further includes a buckle sensor 22 that may preferably be disposed within a seat belt buckle 24 of the seat assembly 18. The buckle sensor 22 is configured to determine whether a tongue 26 of a seat belt 28 is properly latched to the seat belt buckle 24. The buckle sensor 22 is electrically coupled to a controller 40 disposed within the occupant sensor assembly 12. The seat belt reminder system 10 additionally includes a receiver 30 that is located remote from the controller 40 within the occupant sensor assembly 12, preferably within the vehicle 20. The receiver 30 may be a first transceiver and the transmitter 42 may be a second transceiver in order to support a two-way communication protocol between the transmitter 42 and the receiver 30.

The receiver 30 is electrically coupled to an electrical system 32 of the vehicle 20 and receives electrical power from the electrical system 32 of the vehicle 20. The receiver 30 is configured for wireless communication with a transmitter 42 disposed within the occupant sensor assembly 12. The receiver 30 may be electrically coupled to a vehicle controller 34 that is configured to alert the occupant 14 if the tongue 26 of the seat belt 28 is not properly latched via an alert device 36 such a visual display or an audio annunciator.

An alternate embodiment of the seat belt reminder system 10 may be envisioned in which a third wireless transceiver coupled to the buckle sensor 22 transmits the buckle sensor status to the transmitter 42 (configured as a second transceiver) in the occupant sensor assembly 12. The second transceiver may transmit a signal to the third transceiver to request buckle sensor status and the third transceiver may respond by transmitting a buckle sensor status signal to the second transceiver. The third wireless transceiver coupled to the buckle sensor 22 may be a passive transceiver; it may not require a discrete power supply, such as a battery. The third transceiver may be a radio frequency identification (RFID) tag.

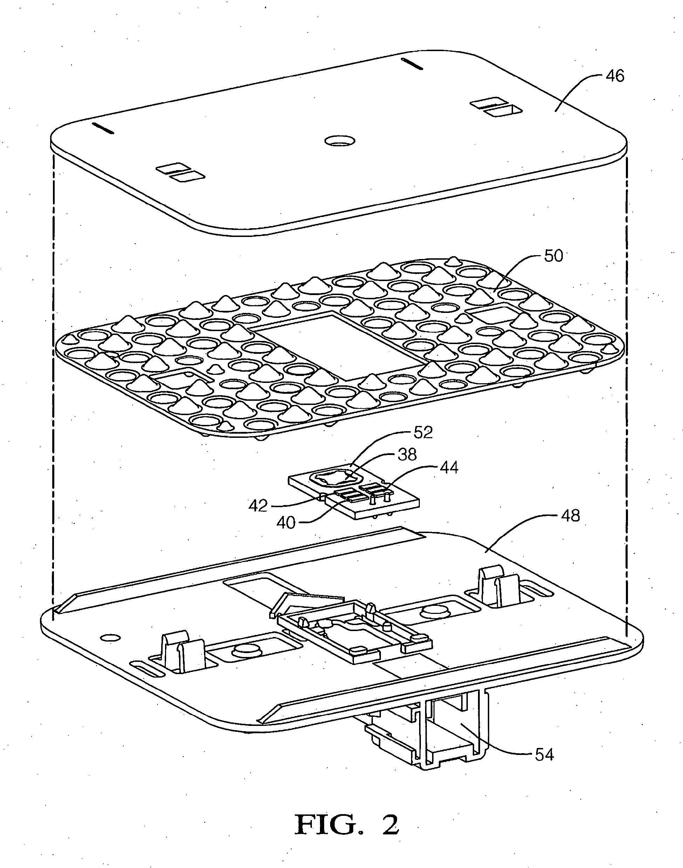

Fig. 2 illustrates a non-limiting example of the occupant sensor assembly 12 that includes a switch mechanism 38 that has a first state that corresponds to an absence of the occupant 14 on the seating surface 16 of the seat assembly 18 and a second state that corresponds to a presence of the occupant 14 on the seating surface 16. The switch mechanism 38 may be configured as a metal dome switch such as those produced by Snaptron, Inc. of Windsor, Colorado. The switch mechanism 38 is open and therefore nonconductive when the switch mechanism 38 is in the first state and is closed and therefore conductive when the switch mechanism 38 is in the second state.

The occupant sensor assembly 12 also includes a controller 40 that is electrically coupled to the switch mechanism 38. The controller 40 is configured to be electrically coupled to a buckle sensor 22. The buckle sensor 22 is configured to detect when the tongue 26 of the seat belt 28 is latched to the seat belt buckle 24. The buckle sensor 22 may also be configured to detect when the tongue 26 of the seat belt 28 is not latched to the seat belt buckle 24. The buckle sensor 22 may include a switch mechanism 38 that is configured to provide a first signal to the controller 40 when the tongue 26 of the seat belt 28 is latched to the seat belt buckle 24 and to provide a second signal to the controller 40 when the tongue 26 of the seat belt 28 is not latched to the seat belt buckle 24. The controller 40 may be configured to monitor the first and second signal and to determine when the tongue 26 of seat belt 28 is latched in the seat belt buckle 24. The controller 40 may be configured to that a change to the first signal or the second signal may cause the controller 40 to leave a low power sleep state and cause a transmitter 42 to send a signal indicating the seat belt buckle 24 status to the receiver 30.

The occupant sensor assembly 12 further includes a transmitter 42 that is electrically coupled to the controller 40. The transmitter 42 is configured for wireless communication with the receiver 30 that is in a location, preferably within the vehicle 20, that is remote from the occupant sensor assembly 12. The transmitter 42 is preferably a low power transmitter so that the transmitter 42 may be powered by a discrete power source, such as a dry cell battery. The transmitter 42 may alternatively be a first transceiver in order to support a two-way communication protocol, such as BLUETOOTH® or ANT™ with a second transceiver serving as the receiver 30. The transmitter 42 may be a stand-alone transmitter such as an nRF8001 available from Nordic Semiconductor, Inc. of Sunnyvale, California or an nRF24AP2 series transmitter, also available from Nordic Semiconductor, Inc. of Sunnyvale, California.

The controller 40 may include a microprocessor or application specific integrated circuit (ASIC) that is configured to determine the status of the buckle sensor 22 and control the transmitter 42. Software that configures the microprocessor or ASIC to determine the status of the buckle sensor 22 and control the transmitter 42 may be stored in non-volatile (NV) memory within the controller 40. Non-limiting examples of the types of NV memory that may be used include electrically erasable programmable read only memory (EEPROM), masked read only memory (ROM) and flash memory. The controller 40 may also include analog to digital (A/D) convertor circuits and digital to analog (D/A) convertor circuits to allow the convertor to establish electrical communication with the occupant sensor assembly 12, buckle sensor 22, or other electrical devices. The controller 40 is preferably a lower power requirement microcontroller, such as a PIC® LF1840 type microcontroller available from Microchip Technology, Inc. of Chandler, Arizona. The transmitter 42 and the controller 40 may alternatively be combined in a single integrated circuit.

The occupant sensor assembly 12 additionally includes a battery 44 that is configured to selectively supply electrical power to the controller 40 and the transmitter 42. The battery 44, the controller 40, and the transmitter 42 are electrically isolated from an electrical system 32 of the vehicle 20. The buckle sensor 22 may also be electrically isolated from the electrical system 32 of the vehicle 20. In a non-limiting example, the battery 44 is not electrically coupled to and does not provide electrical power to the transmitter 42 or the controller 40 when the switch mechanism 38 is in the first state. The battery 44 is electrically coupled to and provides electrical power to the transmitter 42 and the controller 40 when the switch mechanism 38 is in the second state. The battery 44 may further be electrically coupled to and supply electrical power to the buckle sensor 22 when the switch mechanism 38 is in the second state. Alternatively, the controller 40 may be constantly electrically coupled to the battery 44 and the controller 40 may be in a low power sleep state until switch mechanism 38 is in the second state. The controller 40 may cause electrical power to be provide to the transmitter 42 when the switch mechanism 38 is in the second state. The battery 44 may be a coin type battery, such as a CR2032 type battery available from Duracell of Bethel, Connecticut.

The occupant sensor assembly 12 may further include a first plate 46, a second plate 48 and a spring 50 that is disposed between the first plate 46 and the second plate 48. The spring 50 may be configured to collapse when the occupant 14 sits on the seating surface 16 of the seat assembly 18. The switch mechanism 38 may be affixed to the first plate 46 and may be contacted by the second plate 48 or an actuator affixed to the second plate 48 when the spring 50 collapses, thereby causing the switch mechanism 38 to change from the first state corresponding to the absence of the occupant 14 to the second state corresponding to the presence of the occupant 14. The switch mechanism 38, the transmitter 42, the controller 40, and the battery 44 may be mounted on a small circuit board 52 that is affixed to the first plate 46. An electrical connector 54 may be provided to connect a wiring harness between the controller 40 and the buckle sensor 22.

The first plate 46 is preferably made of a non-compliant plastic material such as polycarbonate (PC) or polyoxymethylene (POM), also known as acetal. The second plate 48 is preferably made of a non-compliant plastic material such as acrylonitrile butadiene styrene (ABS) or high temperature ABS. In a non-limiting example, the thickness of the first and second plates 46, 48 may be 1.5 to 1.7 mm. Optionally, stiffening ribs may be added to the first or second plates 46, 48 to enhance non-compliance of the first or second plates 46, 48. The first plate 46 and the second plate 48 are substantially non-compliant so that compressive forces applied to the occupant sensor assembly 12 due to seat occupant weight are nearly uniformly applied to the spring 50. As used herein, a substantially non-compliant plate exhibits a transverse deflection that is less than 10% of the lateral dimension of the first or second plate 46, 48 when a maximum compressive force is applied to the occupant sensor assembly 12

The spring 50 may comprise an elastomeric mat 50 that is disposed between the first plate 46 and the second plate 48. The elastomeric mat 50 is preferably made of a resilient material such as silicone. The elastomeric mat 50 may comprise protuberances that extend toward and contact at least one of the first plate 46 and the second plate 48. The protuberances may be configured to collapse when the occupant 14 sits on the seating surface 16. Alternatively, the spring 50 may be a metallic spring such as a coil compression spring or a leaf spring

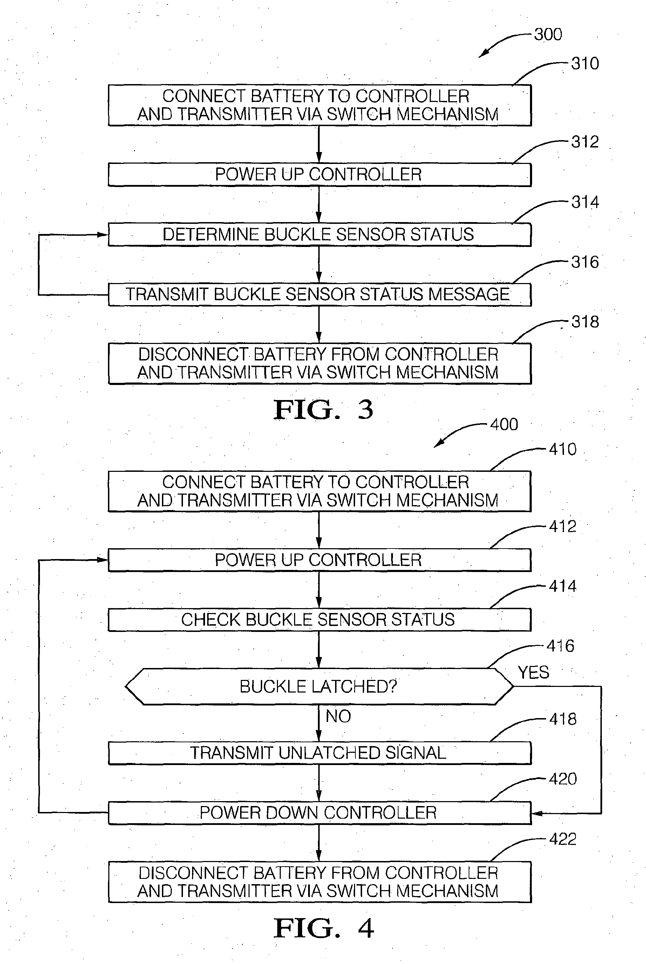

Fig. 3 illustrates a non-limiting example of a flowchart 300 of a sequence of events that describes the operation of the occupant sensor assembly 12. The transmitter 42 and the controller 40 may be disconnected from the battery 44 until the switch mechanism 38 detects the presence of an occupant 14 on the seating surface 16. When the occupant 14 sits on the seating surface 16, as shown at step 310, the occupant sensor assembly 12 may connect the battery 44 to the controller 40 and the transmitter 42 via the switch mechanism 38. The controller 40 may then power-up as shown at step 312 and the controller 40 may determine the state of the buckle sensor 22 as shown in step 314. The controller 40 may then command the transmitter 42 to send a signal reporting the state of the buckle sensor 22 as shown at step 316. The controller 40 may then continue to monitor the buckle sensor status by looping between steps 314 and 316 until the occupant 14 leaves the seat, thereby disconnecting the battery 44 from the transmitter 42 and the controller 40 via the switch mechanism 38 as shown in step 318.

Alternatively, the controller 40 may be continually powered by the battery 44. The controller 40 may be in a low power sleep state when the switch mechanism 38 does not detect an occupant 14 on the seating surface 16 and may enter an awake mode when the switch mechanism 38 does detect an occupant 14 on the seating surface 16. The controller 40 may also cause electrical power to be supplied to the transmitter 42 when the controller 40 is in the awake mode. When the switch mechanism 38 no longer detects an occupant 14 on the seating surface 16, the controller 40 may no longer supply power to the transmitter 42 and the controller 40 may reenter the low power sleep mode.

Fig. 4 illustrates another non-limiting example of a flowchart 400 of a sequence of events that describes the operation of the occupant sensor assembly 12. The transmitter 42 and the controller 40 are disconnected from the battery 44 until the switch mechanism 38 detects the presence of an occupant 14 on the seating surface 16. When the occupant 14 sits on the seating surface 16, as shown at step 410., the controller 40 may then power-up as shown at step 412 and the controller 40 may determine the state of the buckle sensor 22 as shown in step 414. If the controller 40 determines that the seat belt buckle 24 is not latched at step 416, the controller 40 commands the transmitter 42 to send a buckle unlatched signal to the receiver 30 as shown in step 418 and proceeds to step 420. If the controller 40 determines that the seat belt buckle 24 is latched at step 416, the controller 40 may not command the transmitter 42 to send a signal to the receiver 30 and proceeds to step 420. This may help to preserve battery power by only powering the transmitter 42 when the occupant 14 needs to be alerted to take corrective action regarding the latching of the seat belt 28. Alternatively, the controller 40 may command the transmitter 42 to send a signal to the receiver 30 if the seat belt buckle 24 is latched. At step 420, the controller 40 may enter a low-power "sleep" state. The controller 40 may then periodically "wake-up" by returning to step 412. The controller 40 may continue to check the buckle sensor status by looping through steps 412 through 420 until the occupant 14 leaves the seat, thereby disconnecting the battery 44 from the transmitter 42 and the controller 40 via the switch mechanism 38 as shown in step 422.

The occupant sensor assembly 12 provides the benefit of detecting whether the occupant 14 has properly latched the seat belt 28 into the seat belt buckle 24. A wiring harness between the vehicle 20 and the occupant sensor assembly 12 is not required to provide power or signal communication. By providing power to the controller 40 and transmitter 42 only when the seat is occupied, as shown in Fig. 2, battery power may be conserved and the lifetime of the battery 44 is lengthened.

By configuring the controller 40 to transmit a signal only when the seat is occupied and the seat belt 28 is not latched, as shown in Fig. 3, additional battery power may be saved and the battery life further lengthened. Battery power may be further conserved by entering a low power state for the controller 40 after determining the buckle sensor status and only periodically powering up the controller 40 to check buckle sensor status.

Referring once more to Fig. 1, the seat belt reminder system 10 includes an occupant sensor assembly 12 as previously described that is configured to detect an occupant 14 on a seating surface 16 of a seat in a vehicle 20.

The seat belt reminder system 10 also includes the buckle sensor 22 that is configured to detect when the tongue 26 of a seat belt 28 is latched to a seat belt buckle 24. The buckle sensor 22 is electrically coupled to the controller 40 included in the occupant sensor assembly 12. The buckle sensor 22 may be connected to the controller 40 via a wiring harness.

Fig. 1 illustrates a non-limiting example of a seat assembly 18 configured for use in a vehicle 20. The seat assembly 18 includes the seat belt buckle 24 which includes the buckle sensor 22. The buckle sensor 22 is configured to detect whether a tongue 26 of a seat belt 28 is latched to the seat belt buckle 24. The buckle sensor 22 is configured to detect whether a tongue 26 of a seat belt 28 is latched to a seat belt buckle 24 as previously described.

The seat assembly 18 includes an occupant sensor assembly 12, as previously described, disposed within a seat cushion of a seat. The occupant sensor assembly 12 is configured to detect an occupant 14 on a seating surface 16 of the seat cushion.

The seat assembly 18 includes a battery 44, wherein the battery 44 is isolated from an electrical system 32 of the vehicle 20, as previously described.

The seat assembly 18 includes a controller 40 electrically coupled to the occupant sensor assembly 12. The controller 40 is configured to be electrically coupled to a buckle sensor 22, as previously described.

The seat assembly 18 includes a transmitter 42 electrically coupled to the controller 40 and configured for wireless communication with a receiver 30 located remote from the controller 40. The controller 40 and the transmitter 42 are electrically coupled to the battery 44 only when the occupant sensor assembly 12 detects the occupant 14 on the seating surface 16 of the seat cushion.

The seat assembly 18 offers the benefit of not requiring a wiring harness from the vehicle 20 to the seat assembly 18 to supply electrical power or signal communication to the occupant sensor assembly 12 in the seat assembly 18. Eliminating the wiring harness will increase reliability of the seat assembly 18 that has fore/aft adjustment because there will be no harness required that may be subjected to bending and flexing when the seat assembly 18 is moved. Additionally, the seat assembly 18 eliminates the need to disconnect and reconnect a wiring harness to the occupant sensor assembly 12 if the seat assembly 18 is removed from the vehicle 20; either for vehicle service or for reconfigurable seating arrangements, such as those found in some minivan and sport utility vehicles.

Accordingly, a seat belt reminder system 10, an occupant sensor assembly 12 for the seat belt reminder system 10 and a seat assembly 18 are provided. The seat belt reminder system 10 eliminates the need for a wiring harness from the vehicle 20 to the seat assembly 18 to connect the occupant sensor assembly 12 and the buckle sensor 22 to the vehicle controller 34 in order to determine whether the occupant 14 has properly latched the tongue 26 of the seat belt 28 into the seat belt buckle 24. The seat belt reminder system 10 also provides long battery life for the battery 44 that provides power to the controller 40 and transmitter 42 by connecting the controller 40 and transmitter 42 to the battery 44 only when the seat assembly 18 is occupied.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. An occupant sensor assembly (12) configured to detect an occupant (14) on a seating surface (16) of a seat (18) in a vehicle (20), said assembly (12) comprising:
a switch mechanism (38) having a first state corresponding to an absence of the occupant (14) on the seating surface (16) and a second state corresponding to a presence of the occupant (14) on the seating surface (16);
**characterized by**
a controller (40) electrically coupled to the switch mechanism (38),
wherein the controller (40) is electrically coupled to a buckle sensor (22) configured to detect whether a tongue (26) of a seat belt (28) is latched to a seat belt buckle (24);
a transmitter (42) electrically coupled to the controller (40) and configured for wireless communication with a receiver (30) located remote from the occupant sensor assembly (12); and
a battery (44) configured to selectively supply electrical power to the controller (40) and the transmitter (42), wherein the battery (44) is electrically isolated from an electrical system (32) of the vehicle (20), wherein the battery (44) is not electrically coupled to the transmitter (42) when the switch mechanism (38) is in the first state, wherein the battery (44) is electrically coupled to the transmitter (42) when the switch mechanism (38) is in the second state.

2. The assembly (12) of claim 1, wherein the assembly (12) further comprises:
a first plate (46);
a second plate (48); and
a spring (50) disposed between the first plate (46) and the second plate (48), where the spring (50) collapses when the occupant (14) sits on the seating surface (16), wherein the switch mechanism (38) is affixed to at least one of the first plate (46) and the second plate (48), the switch mechanism (38) having the first state corresponding to the absence of the occupant (14) whereby the spring (50) is not collapsed, and the second state corresponding to the presence of the occupant (14) whereby the spring (50) is collapsed.

3. The assembly (12) of claim 2, wherein the spring (50) comprises an elastomeric mat (50).

4. The assembly (12) of claim 2, wherein the spring (50) comprises a metallic spring.

5. The assembly (12) of claim 3, wherein the elastomeric mat (50) comprises protuberances that extend toward and contact at least one of the first plate (46) and the second plate (48), where the protuberances collapse when the occupant (14) sits on the seating surface (16).

6. The assembly (12) of claim 1, wherein the battery (44) is not electrically coupled to the controller (40) when the switch mechanism (38) is in the first state and wherein the battery (44) is electrically coupled to the controller (40) when the switch mechanism (38) is in the second state.

7. The assembly (12) of claim 1, wherein the system is configured to transmit a signal to the receiver (30) via the transmitter (42) only when the occupant sensor assembly (12) detects the occupant (14) on the seating surface (16) and the buckle sensor (22) detects that the tongue (26) is not latched to the seat belt buckle (24).

## Patentansprüche

1. Eine Insassensensorbaugruppe (12), die konfiguriert ist zum Erfassen eines Insassen (14) auf einer Sitzoberfläche (16) eines Sitzes (18) in einem Fahrzeug (20), wobei die Baugruppe (12) aufweist:
einen Schaltmechanismus (38) mit einem ersten Zustand entsprechend einer Abwesenheit des Insassen (14) auf der Sitzoberfläche (16) und einem zweiten Zustand entsprechend einer Anwesenheit des Insassen (14) auf der Sitzoberfläche (16);
**gekennzeichnet durch**
eine Steuervorrichtung (40), die elektrisch mit dem Schaltmechanismus (38) gekoppelt ist, wobei die Steuervorrichtung (40) elektrisch mit einem Gurtschlosssensor (22) gekoppelt ist, der konfiguriert ist, um zu erfassen, ob eine Zunge (26) eines Sicherheitsgurts (28) in einem Sicherheitsgurtschloss (24) eingerastet ist;
einen Sender (42), der elektrisch mit der Steuervorrichtung (40) gekoppelt ist und konfiguriert ist zur drahtlosen Kommunikation mit einem Empfänger (30), der sich entfernt von der Insassensensorbaugruppe (12) befindet; und
eine Batterie (44), die konfiguriert ist zum selektiven Liefern von elektrischer Energie an die Steuervorrichtung (40) und an den Sender (42), wobei die Batterie (44) von einem elektrischen System (32) des Fahrzeugs (20) elektrisch isoliert ist, wobei die Batterie (44) nicht elektrisch mit dem Sender (42) gekoppelt ist, wenn der Schaltmechanismus (38) in dem ersten Zustand ist, wobei die Batterie (44) elektrisch mit dem Sender (42) gekoppelt ist, wenn der Schaltmechanismus (38) in dem zweiten Zustand ist.

2. Die Baugruppe (12) gemäß Anspruch 1, wobei die Baugruppe (12) weiter aufweist:
eine erste Platte (46);
eine zweite Platte (48); und
eine Feder (50), die zwischen der ersten Platte (46) und der zweiten Platte (48) angeordnet ist, wobei die Feder (50) verkürzt ist, wenn der Insasse (14) auf der Sitzoberfläche (16) sitzt, wobei der Schaltmechanismus (38) an zumindest einer der ersten Platte (46) und der zweiten Platte (48) befestigt ist, wobei der Schaltmechanismus (38) den ersten Zustand entsprechend der Abwesenheit des Insassen (14) hat, wodurch die Feder (50) nicht verkürzt ist, und den zweiten Zustand entsprechend der Anwesenheit des Insassen (14) hat, wodurch die Feder (50) verkürzt ist.

3. Die Baugruppe (12) gemäß Anspruch 2, wobei die Feder (50) eine elastomere Matte (50) aufweist.

4. Die Baugruppe (12) gemäß Anspruch 2, wobei die Feder (50) eine Metallfeder aufweist.

5. Die Baugruppe (12) gemäß Anspruch 3, wobei die elastomere Matte (50) Vorsprünge aufweist, die sich in Richtung zumindest einer der ersten Platte (46) und der zweiten Platte (48) erstrecken und diese kontaktieren, wobei die Vorsprünge verkürzt werden, wenn der Insasse (14) auf der Sitzoberfläche (16) sitzt.

6. Die Baugruppe (12) gemäß Anspruch 1, wobei die Batterie (44) nicht elektrisch mit der Steuervorrichtung (40) gekoppelt ist, wenn der Schaltmechanismus (38) in dem ersten Zustand ist, und wobei die Batterie (44) elektrisch mit der Steuervorrichtung (40) gekoppelt ist, wenn der Schaltmechanismus (38) in dem zweiten Zustand ist.

7. Die Baugruppe (12) gemäß Anspruch 1, wobei das System konfiguriert ist zum Senden eines Signals an den Empfänger (30) über den Sender (42) nur, wenn die Insassensensorbaugruppe (12) den Insassen (14) auf der Sitzoberfläche (16) erfasst und der Gurtschlosssensor (22) erfasst, dass die Zunge (26) nicht in dem Sicherheitsgurtschloss (24) eingerastet ist.

## Revendications

1. Ensemble détecteur d'occupant (12) configuré pour détecter un occupant (14) sur une surface d'assise (16) d'un siège (18) dans un véhicule (20), ledit ensemble (12) comprenant :
un mécanisme commutateur (38) ayant un premier état correspondant à une absence de l'occupant (14) sur la surface d'assise (16) et un second état correspondant à une présence de l'occupant (14) sur la surface d'assise (16) ;
**caractérisé par**
un contrôleur (40) couplé électriquement au mécanisme commutateur (38), dans lequel le contrôleur (40) est couplé électriquement à un capteur de boucle (22) configuré pour détecter si une languette (26) d'une ceinture de siège (28) est verrouillée à une boucle de ceinture de siège (24) ;
un émetteur (42) couplé électriquement au contrôleur (40) et configuré pour une communication sans fil avec un récepteur (30) situé à distance de l'ensemble détecteur d'occupant (12) ; et
une batterie (44) configurée pour alimenter sélectivement une puissance électrique au contrôleur (40) et à l'émetteur (42), dans lequel la batterie (44) est isolée électriquement vis-à-vis d'un système électrique (32) du véhicule (20), dans lequel la batterie (44) n'est pas couplée électriquement à l'émetteur (42) quand le mécanisme commutateur (38) est dans le premier état, alors que la batterie (44) est couplée électriquement à l'émetteur (42) quand le mécanisme commutateur (3 8) est dans le second état.

2. Ensemble (12) selon la revendication 1, dans lequel l'ensemble (12) comprend en outre :
une première plaque (46) ;
une seconde plaque (48) ; et
un ressort (50) disposé entre la première plaque (46) et la seconde plaque (48), de sorte que le ressort (50) s'écrase quand l'occupant (14) est assis sur la surface d'assise (16), ledit mécanisme commutateur (38) étant fixé sur au moins une plaque parmi la première plaque (46) et la seconde plaque (48), le mécanisme commutateur (3 8) présentant le premier état correspondant à l'absence de l'occupant (14) lorsque le ressort (50) n'est pas écrasé, et présentant le second état correspondant à la présence de l'occupant (14) lorsque le ressort (50) est écrasé.

3. Ensemble (12) selon la revendication 2, dans lequel le ressort (50) comprend un panneau en élastomère (50).

4. Ensemble (12) selon la revendication 2, dans lequel le ressort (50) comprend un ressort métallique.

5. Ensemble (12) selon la revendication 3, dans lequel le panneau en élastomère (50) comprend des protubérances qui s'étendent vers et jusqu'en contact avec au moins une plaque parmi la première plaque (46) et la seconde plaque (48), de sorte que les protubérances s'écrasent quand l'occupant (14) est assis sur la surface d'assise (16).

6. Ensemble (12) selon la revendication 1, dans lequel la batterie (44) n'est pas couplée électriquement au contrôleur (40) quand le mécanisme commutateur (38) est dans le premier état, et dans lequel la batterie (44) est couplée électriquement au contrôleur (40) quand le mécanisme commutateur (38) est dans le second état.

7. Ensemble (12) selon la revendication 1, dans lequel le système est configuré pour émettre un signal au récepteur (30) via l'émetteur (42) uniquement quand l'ensemble détecteur d'occupant (12) détecte l'occupant (14) sur la surface d'assise (16) et que le détecteur de boucle (22) détecte que la languette (26) n'est pas verrouillée sur la boucle de ceinture de siège (24).
